# NOUVEAU FASCICULE DE BREVET EUROPEEN

(11) **EP 2 230 976 B2**
(45) Date de publication et mention de la décision concernant l'opposition: **04.04.2018**
(45) Mention de la délivrance du brevet: 30.07.2014
(21) Numéro de dépôt: 08872110.5
(22) Date de dépôt: 13.11.2008
(51) Int. Cl.: A47J 39/00

(54) **PLATEAU-REPAS COMPORTANT DES ZONES DE CHAUFFE DISTINCTES, ET CHARIOT DE TRANSPORT ADAPTÉ POUR CHAUFFER DE TELS PLATEAUX-REPAS**
ESSENSTABLETT, DAS VERSCHIEDENE ERHITZUNGSZONEN UMFASST UND TRANSPORTWAGEN, DER FÜR DAS ERHITZEN DIESER ESSENSTABLETTS ANGEPASST IST
MEAL TRAY COMPRISING DISTINCT HEATING AREAS AND TRANSPORT TROLLEY ADAPTED FOR HEATING SUCH MEAL TRAYS

(30) Priorité: 13.11.2007 FR 0707973
(43) Date de publication de la demande: 29.09.2010
(73) Titulaire: Platex Composites, 92700 Colombes (FR)
(72) Inventeur: WARNOD, Marc, 92200 Neuilly-sur-Seine (FR)
(74) Mandataire: Novagraaf Technologies
(86) Numéro de dépôt international: PCT/FR2008/001597
(87) Numéro de publication internationale: WO 2009/098370

(56) Documents cités:
- FR-A- 2 269 901
- FR-A- 2 510 385
- US-A- 4 041 277
- US-A- 4 167 983

## Description

L'invention concerne le domaine de la restauration collective, et notamment de la remise en température de plats cuisinés réfrigérés.

L'invention concerne plus particulièrement des plateaux-repas aptes à remettre et maintenir en température des plats cuisinés réfrigérés disposés sur ces plateaux, ainsi que des chariots de transport destinés à transporter d'un point de préparation et de stockage des plats cuisinés aux points de consommation.

Il est connu d'utiliser dans les collectivités, et en particulier dans les hôpitaux, un procédé d'acheminement des plats cuisinés selon une technique dite de « liaison froide ». Selon ce procédé, les aliments sont cuisinés puis refroidis rapidement. Les aliments cuisinés passent ainsi d'un état chaud correspondant à une température à coeur comprise entre 65 et 75 ° Celsius à un état froid correspondant à une température à coeur de l'ordre de 3° Celsius. Ce refroidissement est réalisé par l'intermédiaire d'une cellule de réfrigération rapide, soit mécanique, soit cryogénique. Les aliments sont alors stockés au froid jusqu'à leur transport aux différents points de consommation. Le transport s'effectue classiquement en disposant les plats cuisinés sur des plateaux lesquels sont chargés dans un chariot de transport prévu à cet effet. Certains des plats cuisinés sont toutefois remis en température séparément, puis re-disposés sur les plateaux avec les plats froids. Le plateau comportant des plats cuisinés réfrigérés et des plats cuisinés remis en température est alors présenté au consommateur.

Une méthode employée pour la remise en température des plats cuisinés est leur réchauffage. Cependant, cette méthode conduit à une étape de remise en température restant longue et fastidieuse. En outre, elle n'évite pas les pertes de calories des plats cuisinés réchauffés, entre le moment où le plat cuisiné est remis en température et le moment où le plat cuisiné est remis au consommateur.

Pour tenter de palier certains de ces inconvénients, il a été développé des chariots de transport de plateaux sur lesquels sont disposés des plats cuisinés réfrigérés intégrant des moyens de remise en température. Ces moyens de température se présentent sous forme de plaques chauffantes.

Les plateaux sont généralement composés d'une première partie de plateau supportant un plat à remettre en température et d'une deuxième partie de plateau supportant les plats qui doivent être gardés au frais. La première partie du plateau est destinée à être disposée au-dessus, ou en contact direct, avec la plaque.

Un tel chariot présente cependant un inconvénient majeur lié à la présence d'un système de chauffe embarqué. En effet, le système embarqué conduit à un chariot lourd et encombrant, et par conséquent présentant une faible maniabilité. Il s'ensuit une consommation électrique élevée, et un prix de revient élevé.

Il a été également proposé dans la demande de brevet FR 2 510 384 un plateau chauffant comprenant une régénération intégrée en température des aliments. Pour ce faire, le plateau comporte au moins une plaque de diffusion de chaleur sur laquelle on dispose le récipient à régénérer. La plaque de diffusion de chaleur comporte une résistance électrique reliée à des contacts électriques faisant légèrement saillie par rapport au chant du bord périphérique du plateau chauffant.

Le réceptacle destiné à recevoir les plateaux est un réceptacle à au moins un compartiment dont le fond est pourvu de deux conducteurs électriques verticaux coopérant avec les contacts électriques des plateaux individuels soumis à une poussée exercée par des moyens solidaires de la porte du compartiment dont seule la fermeture verrouillée provoque la mise sous tension des deux conducteurs électriques.

La plaque de diffusion présente cependant l'inconvénient de diffuser la chaleur aux aliments disposés sur le plateau, à proximité. Par ailleurs, le plateau ne permet pas de chauffer les aliments disposés sur le plateau à des températures différentes.

Les documents US 4 167 983, FR 2 269 901, US 4 041 277 et FR 2 510 385 divulguent également des systèmes de plateaux-repas.

L'invention vise notamment à pallier les inconvénients de l'art antérieur précédemment décrits en proposant un système plateaux-repas et chariot de transport de plateaux-repas qui permet de chauffer ou de remettre en température rapidement des plats disposés sur les plateaux-repas tout en maintenant les autres plats disposés sur le plateau froids ou à une température différente.

A cet effet, et selon un premier aspect, l'invention concerne un plateau-repas selon la revendication 1.

Le plateau-repas permet ainsi de présenter une surface de stockage présentant une zone de chauffe (ou surface de chauffe du plateau-repas) parfaitement délimitée, toute transmission de chaleur d'une zone à une autre étant empêchée. En d'autres termes, en dehors des zones de chauffe, il n'y a aucune transmission thermique.

Afin de faciliter la lecture de la présente, on emploiera simplement les termes de « moyens de chauffage » pour désigner l'expression « les moyens de chauffage ou de remise et de maintien de température ».

Selon l'invention, les moyens de chauffage définissent au moins deux zones de chauffe de la surface de stockage ayant respectivement une température de chauffe de valeur différente.

Selon un exemple préféré de réalisation, les moyens de chauffage définissent deux zones de chauffe, une première zone de chauffe distribuera une température de chauffe de la surface de stockage dont la température de chauffe est de l'ordre de 120 degrés Celsius, et une deuxième zone de chauffe de la surface de stockage dont la température est de l'ordre de 90 degrés Celsius.

De telles températures permettent ainsi de régénérer et de mettre les aliments à la température adéquate pour être consommés.

Ainsi, à chaque zone de chauffe correspond une température spécifique des aliments. Pour une zone de chauffe de 120 °C, on obtient des aliments présentant une température de 65 ° Celsius, et pour une zone de chauffe de 90° Celsius, les aliments sont chauffés à coeur. Il est bien entendu évident que les zones de chauffe peuvent présenter les mêmes températures de chauffe. Le choix de zones de chauffe distinctes pourra être fait pour des raisons de commodités d'emplacements distincts sur le plateau des plats à chauffer, de répartition du poids, etc.

Selon un mode de réalisation particulier de l'invention, les moyens de chauffage comprennent au moins deux résistances, chaque résistance définissant sensiblement une zone de chauffe. Avantageusement, les résistances sont moulées dans le matériau du plateau.

La zone de chauffe s'étend en effet légèrement au delà de la résistance, jusqu'à environ 1 à 1,5 centimètres de la résistance.

Afin d'atteindre rapidement la température maximale d'une zone de chauffe, il sera avantageux que la résistance soit constituée d'un filament formant des plis sensiblement parallèles.

La longueur du fil, sa répartition (écartement des plis) et sa disposition dans le plateau sera fonction de l'utilisation des plateaux-repas. Il sera toutefois préféré un écartement faible entre chacun des pli de fil afin d'obtenir une zone de chauffe relativement homogène.

Avantageusement, la (ou les) résistance(s) est(sont) formée(s) par un filament résistif d'alliage Nickel-Chrome.

Il pourra être prévu que les contacts électriques du plateau soient magnétiques. Cela permettra ainsi une connexion plus aisée avec les contacts électriques correspondants du chariot.

Selon un second aspect, l'invention concerne un chariot de transport d'aliments réfrigérés ou surgelés destinés à recevoir et à chauffer des plateaux-repas tels que décrits précédemment. Le chariot de transport est du type comprenant une enceinte comportant un ou plusieurs compartiment(s) destiné(s) à recevoir respectivement un plateau-repas. Il est caractérisé en ce qu'il comporte des moyens de connexion électriques aptes à coopérer avec les contacts électriques des plateaux-repas disposés un compartiment du réceptacle.

Avantageusement, le chariot comprend au moins une porte latérale, lesdits moyens de connexion électriques étant portés sur la face intérieure de ladite porte de sorte que la fermeture de la porte provoque la mise sous tension desdits moyens de connexions du chariot.

Avantageusement, les moyens de connexion sont magnétiques.

D'autres objets et avantages de l'invention apparaîtront au cours de la description qui suit, faite en référence aux dessins annexés, dans lesquels :
- la figure 1 est une représentation schématique de dessus d'un plateau-repas présentant deux zone de chauffe ;
- la figure 2 est une vue de côté du plateau-repas de la figure 1 illustrant les contacts électriques ;
- les figures 3a, 3b, 3c illustrent des exemples de tailles et d'emplacement de zones de chauffe d'un plateau-repas selon l'invention ; et
- la figure 4 illustre une représentation schématique d'un chariot de transport destiné à recevoir des plateaux-repas selon l'invention.

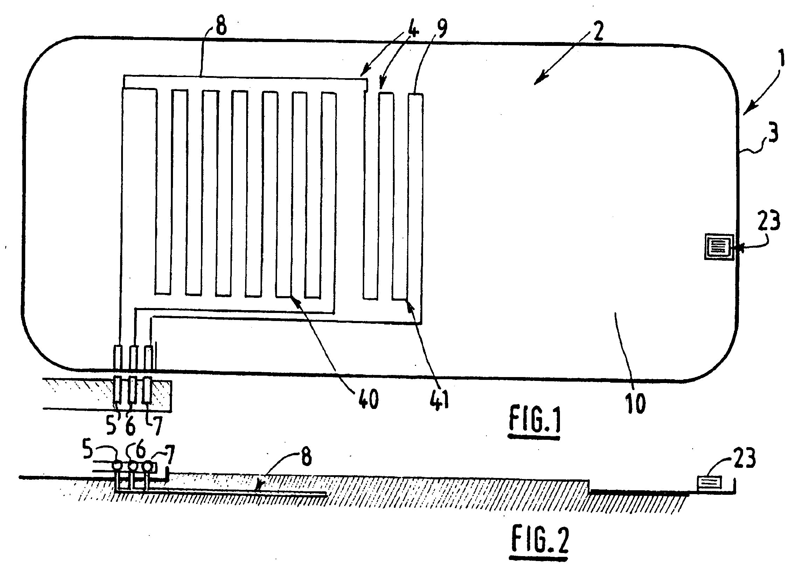

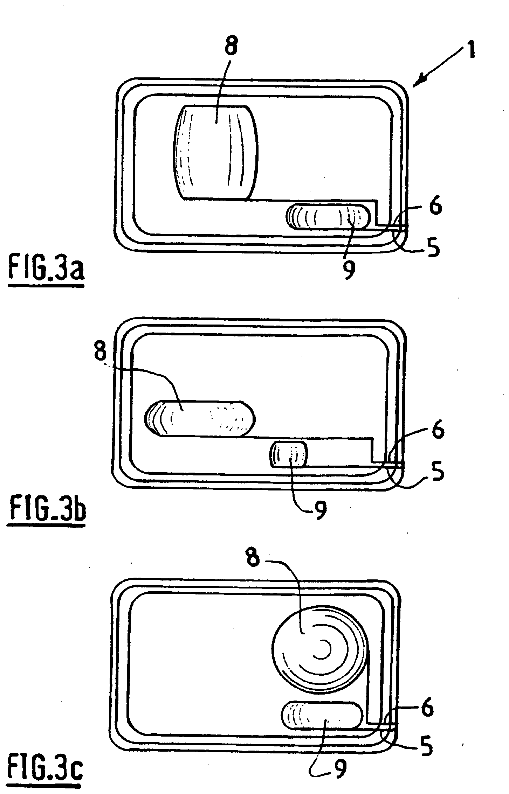

En relation avec les figures 1 à 4, il est décrit un plateau-repas 1 comprenant une surface de stockage 2 sensiblement plane délimitée par un bord périphérique 3. Les plats, assiettes et autres sont disposés sur la surface de stockage 2 du plateau-repas 1.

Ledit plateau-repas 1 comprend des moyens de chauffage ou de remise et de maintien de température d'une partie au moins de la surface de stockage. On parlera par la suite de moyens de chauffage 4 pour désigner les moyens de chauffage ou de remise et de maintien de température.

Les moyens de chauffage 4 sont agencés pour définir, dans l'exemple illustré sur la figure 1, deux zones de chauffe 8, 9 de la surface de stockage 2 distinctes et isolées les unes des autres. Le plateau-repas 1 présente ainsi, sur une même surface de stockage 2, des zones de chauffe 8, 9 et des zones froides (une seule et même zone froide 10).

Lesdits moyens de chauffage 4 consistent en une ou plusieurs résistances, de préférence surmoulées dans le plateau comme illustrées sur la figure 2. Les résistances se présentent avantageusement sous la forme d'un filament disposé en plis parallèles. Cet agencement du fil a pour avantage de faciliter la répartition de la chaleur et ainsi de permettre une atteinte rapide de la température de chauffe maximale.

Les résistances sont calibrées pour dissiper de la chaleur de manière continue une puissance comprise entre 250 Watts et 320 Watts. Elles sont constituées avantageusement par un filament en alliage Nickel-Chrome. La nature de cet alliage permet en effet une auto-régulation de la dissipation de chaleur.

Le plateau-repas 1 illustré sur la figure 1 comporte deux résistances 40 et 41 distinctes correspondant respectivement à la zone de chauffe 8 et à la zone de chauffe 9.

Le bord périphérique 3 du plateau-repas 1 comporte trois contacts électriques 5, 6 et 7 aptes à établir électrique en se connectant avec des contacts électriques associés d'un chariot de transport adapté pour de tels plateaux, ou à une alimentation secteur.

Chacune des résistances 40, 41 est reliée respectivement à un des contacts électriques 5, 6, le troisième contact électrique constituant la prise de terre.

Bien entendu, il s'agit d'une configuration choisie à titre d'exemple, le nombre de résistances et par conséquent le nombre de contacts électriques variant en fonction du nombre de zones de chauffe souhaitées.

Selon une configuration particulière les contacts électriques sont du type magnétique.

Selon une configuration particulière, la résistance 40 chauffe la zone de chauffe 8 correspondante de la surface de stockage 2 jusqu'à atteindre une température de l'ordre de 120 degrés Celsius. Le chauffage des assiettes à cette température pendant une durée déterminée (environ 45 minutes) permet de chauffer à coeur des aliments jusqu'à 65° Celsius.

La résistance 41, quant à elle, chauffe la zone de chauffe 9 correspondante de la surface de stockage jusqu' à atteindre une température de l'ordre de 90° Celsius. Le chauffage des assiettes à cette température pendant environ 45 minutes permet de chauffer à coeur des aliments.

On comprend bien que selon la destination des plateaux-repas, les plateaux pourront comporter plus ou moins de résistance délivrant une puissance plus ou moins importante.

Il pourra être prévu plusieurs zones de chauffe présentant des températures différentes. Chaque plat sur un même plateau pourra ainsi bénéficier d'un chauffage personnalisé pour être chauffé à la température adaptée.

Le plateau-repas est réalisé en résine polyester laquelle est formulée pour transmettre des calories des résistances vers la surface de chauffe définie par les zones de chauffe 8, 9. Ainsi aucun transfert de chaleur ne s'opère entre les zones chaudes, ni même des zones chaudes vers la zone restante froide.

Ainsi, les plats et autre vaisselle disposés dans la zone froide de la surface de stockage 2 du plateau-repas restent réfrigérés, ou tout du moins restent froids.

Le transfert de chaleur s'effectuant dans le sens vertical (du bas vers le haut), et non dans le sens horizontal, les zones de préhension du plateau-repas 1, caractérisées par le bord périphérique 2, restent également froides.

Avantageusement, le plateau-repas comprend une puce RFID 23 permettant de stocker des informations sur le destinataire, le contenu du plateau mais aussi des informations permettant d'établir sa traçabilité.

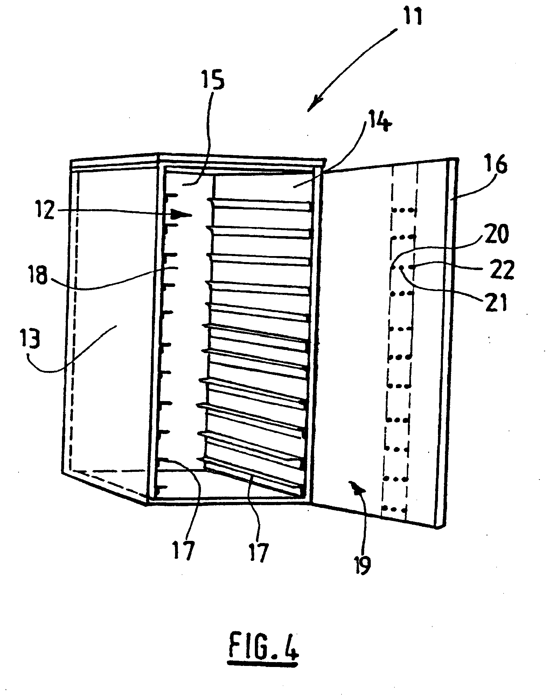

La figure 4 illustre un chariot de transport 11 de plateaux-repas 1 adaptés pour recevoir les plateaux-repas 1 tels que décrits précédemment, et pour activer les moyens de chauffage 4 de chacun des plateaux-repas 1.

Le chariot de transport 11 consiste en une enceinte 12 pourvue notamment de deux parois latérales 13, 14, d'une paroi arrière 15 et d'une porte 16 formant la paroi avant. Les parois latérales 13, 14 sont pourvues de glissières horizontales 17, superposées et équidistantes les unes aux autres, les glissières 17 de la paroi latérale 13, 14 étant disposée en vis-à-vis des glissières 17 de la paroi latérale opposée 14, 13. Les glissières 17 définissent ainsi, avec les parois latérales 13, 14 et la paroi du fond 15, des compartiments de réception 18 des plateaux-repas 1. Chaque compartiment 18 est destiné à recevoir un plateau-repas 1. Plus particulièrement, les glissières 17 de chaque paroi latérale 13, 14 en vis-à-vis forment une paire de glissière sur laquelle est disposé un plateau-repas 1 selon l'invention.

La porte 16 du chariot de transport 11 comporte, sur sa face intérieure 19, des contacts électriques 20, 21, 22 destinés à être mis en contact avec ceux portés par chacun des plateaux-repas 1 disposés dans les compartiments 18. Ces contacts électriques 20, 21, 22 sont disposés de manière à venir en regard des contacts électriques 5, 6, 7 des plateaux-repas 1 disposés dans les compartiments 18 lors de la fermeture de la porte 16, les plateaux-repas étant disposés dans le chariot 11 de sorte que le bord 3 portant les contacts électriques 5, 6, 7 soient disposés du côté de la porte 16. La fermeture de la porte 16 provoque la mise sous tension du chariot 11 et donc l'actionnement de la connexion électrique entre le chariot de transport 11 et les plateaux-repas 1 disposés dans le chariot de transport 11. La connexion électrique ainsi établie, les moyens de chauffage 4 sont activés et les zones de chauffe associées au moyen de chauffage activés mises en chauffe jusqu'à ce que la température de chauffe maximale soit atteinte. La température est alors maintenue de sorte à maintenir les plats chauds.

Dans une configuration avantageuse, il pourra être prévu que la connexion électrique ne soit établie que pour certaines zones de chauffe prédéfinies. Ainsi, le nombre de zones de chauffe de plateau-repas peut être adapté aux plats disposés sur la zone de stockage des plateaux-repas.

L'invention est décrite dans ce qui précède à titre d'exemple. Il est entendu que l'homme du métier est à même de réaliser différentes variantes de l'invention sans pour autant sortir de l'invention.

## Revendications

1. Plateau-repas (1) du type comprenant
- une surface de stockage (2) sensiblement plane délimitée par un bord périphérique (3),
- des moyens de chauffage (4) ou de remise et de maintien de température d'une partie au moins de la surface de stockage (2),
lesdits moyens de chauffage (4) étant reliés à des contacts électriques (5, 6, 7) disposés sur le bord périphérique (3) dudit plateau aptes à coopérer avec des contacts électriques d'un chariot de transport 11,
lesdits moyens de chauffage (4) étant agencés pour définir au moins deux zones de chauffe de la surface de stockage (2), lesdites zones de chauffe (2) étant distinctes et isolées l'une de l'autre,
**caractérisé en ce que** lesdites deux zones de chauffe de la surface de stockage (2) présentent respectivement une température de chauffe de valeur différente, et
**en ce que** la surface de stockage (2) est en résine polyester formulée pour transmettre des calories unidirectionnellement, des moyens de chauffage (4) vers la surface de stockage (2).

2. Plateau-repas (1) selon la revendication 1, **caractérisé en ce que** les moyens de chauffage (4) définissent une première zone de chauffe (8) de la surface de stockage (2) dont la température est de l'ordre de 120 degrés Celsius.

3. Plateau-repas (1) selon la revendication 1 ou la revendication 2, **caractérisé en ce que** les moyens de chauffage (2) définissent une deuxième zone de chauffe (9) de la surface de stockage (2) dont la température est de l'ordre de 90 degrés Celsius.

4. Plateau-repas (1) selon l'une quelconque des revendications précédentes, **caractérisé en ce que** les moyens de chauffage (4) comprennent au moins deux résistances (40, 41) moulées dans ledit plateau-repas (1).

5. Plateau-repas (1) selon la revendication 4, **caractérisé en ce que** l'une au moins des résistances (40, 41) est formée par un filament formant des plis sensiblement parallèles.

6. Plateau-repas (1) selon la revendication 4 ou la revendication 5, **caractérisé en ce que** l'une au moins des résistances (40, 41) est formée par un filament résistif d'alliage Nickel-Chrome.

7. Plateau-repas (1) selon l'une quelconque des revendications précédentes, **caractérisé en ce que** le connecteur est un connecteur magnétique.

8. Chariot de transport (11) d'aliments réfrigérés ou surgelés destinés à recevoir des plateaux-repas (1) comprenant une enceinte (12) pourvue d'une porte (16) latérale, l'enceinte (12) comportant un ou plusieurs compartiment(s) (18) destinés à recevoir respectivement un plateau-repas (1) selon l'une quelconque des revendications précédentes, ledit chariot de transport (11) étant **caractérisé en ce qu'**il comporte des moyens de connexion électriques (20, 21, 22) aptes à coopérer avec les contact électriques des plateaux-repas (1) disposés dans un compartiment (18) de l'enceinte (12), lesdits moyens de connexion électriques (20, 21, 22) étant portés sur la face intérieure de ladite porte (16) de sorte que la fermeture de la porte (16) provoque la mise sous tension desdits moyens de connexions (20, 21, 22).

## Patentansprüche

1. Speisentablett (1), umfassend:
- eine im Wesentlichen flache Auflagefläche (2), die von einem Umfangsrand (3) begrenzt ist,
- Mittel (4) zum Erhitzen oder zum Zurücksetzen und Halten einer Temperatur mindestens eines Teils der Auflagefläche (2),
wobei die Mittel (4) zum Erhitzen mit elektrischen Kontakten (5, 6, 7) verbunden sind, die am Umfangsrand (3) des Tabletts angeordnet und geeignet sind, mit elektrischen Kontakten eines Transportwagens 11 zusammenzuwirken,
wobei die Mittel (4) zum Erhitzen derart angeordnet sind, dass sie mindestens zwei Heizzonen der Auflagefläche (2) definieren, wobei die Heizzonen (2) zueinander unterschiedlich und isoliert sind,
**dadurch gekennzeichnet, dass** die beiden Heizzonen der Auflagefläche (2) jeweils eine Erhitzungstemperatur von unterschiedlichem Wert aufweisen, und
dass die Auflagefläche (2) aus formuliertem Polyesterharz ist, um Wärme in eine Richtung, von den Erhitzungsmitteln (4) zu der Auflagezone (2), zu übertragen.

2. Speisentablett (1) nach Anspruch 1, **dadurch gekennzeichnet, dass** die Erhitzungsmittel (4) eine erste Heizzone (8) der Auflagefläche (2) definieren, deren Temperatur ungefähr 120 Grad Celsius beträgt.

3. Speisentablett (1) nach Anspruch 1 oder Anspruch 2, **dadurch gekennzeichnet, dass** die Erhitzungsmittel (2) eine zweite Heizzone (9) der Auflagefläche (2) definieren, deren Temperatur ungefähr 90 Grad Celsius beträgt.

4. Speisentablett (1) nach einem der vorhergehenden Ansprüche, **dadurch gekennzeichnet, dass** die Erhitzungsmittel (4) mindestens zwei Widerstände (40, 41) umfassen, die in das Speisentablett (1) eingelassen sind.

5. Speisentablett (1) nach Anspruch 4, **dadurch gekennzeichnet, dass** mindestens einer der Widerstände (40, 41) durch ein Filament gebildet ist, das im Wesentlichen parallele Falten bildet.

6. Speisentablett (1) nach Anspruch 4 oder Anspruch 5, **dadurch gekennzeichnet, dass** mindestens einer der Widerstände (40, 41) von einem Widerstandsfilament aus Nickel-Chrom gebildet ist.

7. Speisentablett (1) nach einem der vorhergehenden Ansprüche, **dadurch gekennzeichnet, dass** der Anschlussstecker ein Magnetstecker ist.

8. Transportwagen (11) für gekühlte oder gefrorene Nahrungsmittel, der dazu bestimmt ist, Speisentabletts (1) aufzunehmen, umfassend einen Bereich (12), der mit einer Seitentür (16) versehen ist, wobei der Bereich (12) ein oder mehrere Abteile (18) umfasst, die dazu bestimmt sind, je ein Speisentablett (1) nach einem der vorhergehenden Ansprüche aufzunehmen, wobei der Transportwagen (11) **dadurch gekennzeichnet ist, dass** er elektrische Anschlussmittel (20, 21, 22) umfasst, die geeignet sind, mit den elektrischen Kontakten der Speisentabletts (1) zusammenzuwirken, die in einem Abteil (18) des Bereichs (12) angeordnet sind, wobei die elektrischen Anschlussmittel (20, 21, 22) auf der Innenseite der Tür (16) getragen werden, so dass der Verschluss der Tür (16) die Unterspannungsetzung der Anschlussmittel (20, 21, 22) hervorruft.

## Claims

1. Meal tray (1) of the type comprising
- a substantially planar storage surface (2) delimited by a peripheral rim (3),
- means (4) for heating or regenerating and maintaining the temperature of at least a part of the storage surface (2),
said heating means (4) being linked to electrical contacts (5, 6, 7) positioned on the peripheral rim (3) of said tray suitable for cooperating with electrical contacts of a transport trolley (11),
said heating means (4) being arranged to define at least two heating areas of the storage surface (2), said heating areas (2) being distinct and isolated from one another,
**characterized in that** said two heating areas of the storage surface (2) respectively exhibit a heating temperature of different value, and
**in that** the storage surface (2) is made of polyester resin formulated to transmit calories unidirectionally, from the heating means (4) to the storage surface (2).

2. Meal tray (1) according to Claim 1, **characterized in that** the heating means (4) define a first heating area (8) of the storage surface (2) whose temperature is of the order of 120 degrees Celsius.

3. Meal tray (1) according to Claim 1 or Claim 2, **characterized in that** the heating means (2) define a second heating area (9) of the storage surface (2) whose temperature is of the order of 90 degrees Celsius.

4. Meal tray (1) according to any one of the preceding claims, **characterized in that** the heating means (4) comprise at least two resistors (40, 41) moulded in said meal tray (1).

5. Meal tray (1) according to Claim 4, **characterized in that** at least one of the resistors (40, 41) is formed by a filament forming substantially parallel folds.

6. Meal tray (1) according to Claim 4 or Claim 5, **characterized in that** at least one of the resistors (40, 41) is formed by a resistive filament of nickel-chrome alloy.

7. Meal tray (1) according to any one of the preceding claims, **characterized in that** the connector is a magnetic connector.

8. Transport trolley (11) for refrigerated or frozen foods intended to receive meal trays (1) comprising a chamber (12) provided with a side door (16), the chamber (12) comprising one or more compartment(s) (18) intended to receive, respectively, a meal tray (1) according to any one of the preceding claims, said transport trolley (11) being **characterized in that** it comprises electrical connection means (20, 21, 22) suitable for cooperating with the electrical contacts of the meal trays (1) positioned in a compartment (18) of the chamber (12), said electrical connection means (20, 21, 22) being borne by the interior face of said door (16) such that the closure of the door (16) provokes the powering up of said connection means (20, 21, 22) .
